Europäisches Patentamt

European Patent Office

Office européen des brevets

(19)

(11) Publication number: **0 431 186 A1**

(12) **EUROPEAN PATENT APPLICATION**
**published in accordance with Art.**
**158(3) EPC**

(21) Application number: **90909373.4**

(22) Date of filing: **13.06.90**

(86) International application number:
**PCT/JP90/00770**

(87) International publication number:
**WO 91/00161 (10.01.91 91/02)**

(51) Int. Cl.5: **B23H 7/06**

(30) Priority: **29.06.89 JP 165324/89**

(43) Date of publication of application:
**12.06.91 Bulletin 91/24**

(84) Designated Contracting States:
**CH DE FR GB IT LI**

(71) Applicant: **FANUC LTD.**
**3580, Shibokusa Aza-Komamba Oshino-mura**
**Minamitsuru-gun, Yamanashi 401-05(JP)**

(72) Inventor: **HIGASHI, Izumi Fanuc Dai-3**
**Vira-karamatsu**
**3527-1, Shibokusa Oshino-mura,**
**Minamitsuru-gun**
**Yamanashi 401-05(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) **WIRE CUT ELECTRIC DISCHARGE MACHINING METHOD.**

(57) A wire cut electric discharge machining method capable of improving the operating efficiency and product quality. First electric discharge machining is performed (S2, S3) by moving a wire electrode along a first wire path that is determined based on the wire path designated by the machining program and a first wire diameter correction amount that is read from a memory and equal to the sum of the wire electrode radius, discharging gap and the amount of an uncut portion under the control of a numerical control device, and while performing a first retrace motion (S4) following it, the wire is reversely moved along the first wire path. In each of second to n-th machining the electric discharge machining is performed (S6,S7) by moving the wire along the corresponding wire path determined in response to the wire path designated by the programm and a wire diameter correction amount that gradually decreases with an increasing number of machining runs. When a retrace motion is performed after each machining, the wire is reversely moved along the preceding wire path (S8,S9) to prevent the generation of disconnection and damage to the wire caused by the contact of the wire with the work without fail.

FIG.3

```
        ( START )
            │
     ┌─────────────┐
     │   i = 1     │──── S1
     └─────────────┘
            │
   ┌─────────────────┐
   │  READ Di AND n  │──── S2
   └─────────────────┘
            │
   ┌─────────────────┐
   │ FIRST MACHINING │──── S3
   │     CYCLE       │
   └─────────────────┘
            │
   ┌─────────────────┐
   │    RETRACING    │──── S4
   └─────────────────┘
            │
            ▼
     ┌─────────────┐
     │  i = i + 1  │──── S5
     └─────────────┘
            │
   ┌─────────────────┐
   │     READ Di     │──── S6
   └─────────────────┘
            │
   ┌─────────────────┐
   │ i-TH MACHINING  │──── S7
   │     CYCLE       │
   └─────────────────┘
            │
   ┌─────────────────┐
   │    READ Di-1    │──── S8
   └─────────────────┘
            │
   ┌─────────────────┐
   │    RETRACING    │──── S9
   └─────────────────┘
            │
         ◇ S10
   NO   ╱ i = n? ╲
  ◄────╲         ╱
         ╲     ╱
          │ YES
          ▼
      ( END )
```

# WIRE-CUT ELECTRICAL DISCHARGE MACHINING METHOD

## Technical Field

The present invention relates to a wire-cut electrical discharge machining method capable of improving the production efficiency of an electrical discharge machine and the quality of products.

## Background Art

In wire-cut electrical discharge machining for obtaining a product having a desired shape by applying discharge pulses between a workpiece and a wire electrode (hereinafter referred to as wire) extending therethrough, while moving the workpiece and the wire relative to each other, several cycles of finish machining are generally executed after rough machining, in order to improve the machining accuracy.

For example, after performing the rough machining where the wire is moved along a wire path relatively largely offset with respect to a path (program path) specified by a machining program, the wire is moved backward along the wire path for rough machining by utilizing the retracing function of an electrical discharge machine, so that the wire is returned from a rough machining end position to a rough machining start position. Thereafter, in each cycle of finish machining, the wire is moved along a concerned wire path whose offset is smaller than that of the wire path associated with the rough machining or preceding finish machining cycle, and then a retracing operation is performed along the concerned wire path every time such a finish machining cycle is completed.

As described above, in the conventional retracing operation performed every time the rough machining or each finish machining cycle ends, the wire is moved backward along the wire path associated with the machining cycle finished immediately before the retracing operation. Therefore, during the backward wire movement, the wire is liable to be caught by a bent portion of a machined surface of the workpiece, and is thus easily broken. This lowers the production efficiency of the electrical discharge machine. Further, according to the conventional method, the wire is liable to be brought into contact with the machined surface of the workpiece, so that the machined surface is readily damaged. In particular, if the machined surface of the workpiece is damaged in the final stage of finish machining, resultant flaws cannot be removed and hence the product quality is damaged.

## Disclosure of the Invention

An object of the present invention is to provide a wire-cut electrical discharge machining method capable of improving the production efficiency of an electrical discharge machine and the product quality.

In order to achieve the above object, according to the present invention, a wire-cut electrical discharge machining method is provided, in which a plurality of cycles of electrical discharge machining are successively performed for production of one product. The electrical discharge machining method of the present invention comprises the steps of: (a) successively selecting offset amounts among a group of different offset amounts in a descending order of magnitude; (b) performing electrical discharge machining while moving a wire electrode along a target wire path every time one of the offset amounts is selected, the target wire path being determined based on the selected one offset amount and a reference target wire path; (c) selecting a second offset amount smaller than the offset amount of the target wire path for a corresponding one of those electrical discharge machining cycles which include a cycle of a predetermined order and subsequent cycles, every time the corresponding one electrical discharge machining cycle is completed; and (d) moving the wire electrode in a direction opposite to a wire moving direction for the electrical discharge machining, along a second target wire path every time the second offset amount is selected, the second target wire path being determined based on the selected second offset amount concerned and the reference target wire path.

According to the present invention, as described above, during the plural electrical discharge machining cycles which are successively performed for production of one product, the second offset amount smaller than the offset amount of the target wire path for a corresponding one of those electrical discharge machining cycles which include the cycle of the predetermined order and the subsequent cycles is selected every time the corresponding one electrical discharge machining cycle is completed, and the wire is moved backward along the second target wire path, which is determined based on the second offset amount thus selected and the reference target wire path, whereby the wire can be prevented from being brought into contact with the machined surface of the workpiece during the backward wire movement. As a result, the machined surface of the workpiece cannot be damaged, and thus the product quality is improved. Moreover, even if the machined surface of the workpiece has a bent portion, the wire cannot be caught by the bent portion as it moves backward, so that it cannot be easily broken. Accordingly, the production efficiency of the electrical discharge machine is improved.

Brief Description of the Drawings

Fig. 1 is a schematic block diagram showing a principal part of an electrical discharge machine to which a wire-cut electrical discharge machining method of the present invention is applied;

Fig. 2 is a partial plan view illustrating a wire diameter correction amount used as a control parameter in the present invention;

Fig. 3 is a flowchart of a control program for carrying out a method according to a first embodiment of the present invention;

Fig. 4 is a partial plan view showing a path of travel of a wire electrode undergoing an electrical discharge machining; and

Fig. 5 is a flowchart showing a control program for carrying out a method according to a second embodiment of the present invention.

Best Mode of Carrying Out the Invention

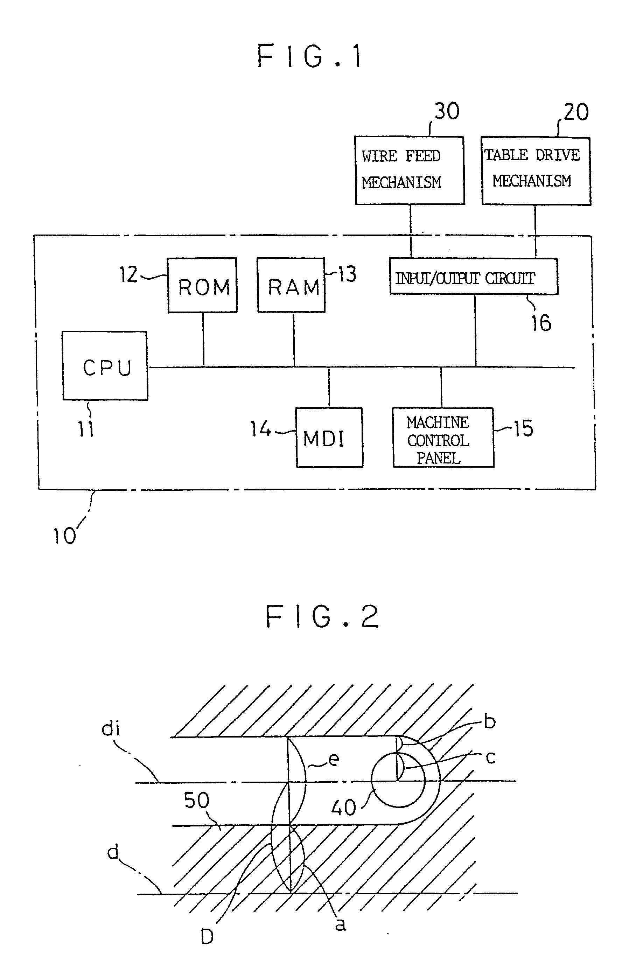

Referring to Fig. 1, an electrical discharge machine for embodying a wire-cut electrical discharge machining method according to a first embodiment of the present invention comprises a numerical control device 10, a table drive mechanism 20 for driving a work table on which a workpiece is placed, and a wire electrode feed mechanism 30.

The numerical control device 10 comprises a central processing unit (CPU) 11 for executing various control programs including a machining program, read-only memory (ROM) 12 storing the control Programs, a random-access memory (RAM) 13 for temporarily storing results of operations executed by the CPU 11, various setting values, etc., a manual data input unit (MDI) 14, a machine control panel 15, and an input/output circuit 16. These elements 12 to 16 are connected to the CPU 11 through busses 17. The table drive mechanism 20 includes servomotors for use as drive sources, position detectors attached individually to the servomotors, and servo circuits connected to the input/output circuit 16 of the numerical control device 10 and the position detectors. The wire feed mechanism 30 is arranged to feed a wire electrode (hereinafter referred to as wire) from a wire feed reel toward a wire recovery container, the wire extending through the workpiece.

Further, the electrical discharge machine is designed to perform rough machining (first cycle of machining) and "n - 1" cycles of finish machining (second to n-th cycles of machining), for example, in order to manufacture one product. In each machining cycle, the work table is moved in a horizontal plane by means of the servomotors driven by the servo circuits each responding to a control output supplied from the CPU 11 executing the machining program and a feedback output supplied from a corresponding one of the position detectors, so that the workpiece is moved relative to the wire. In other words, the wire is moved along target wire travel paths (hereinafter referred to as wire paths) on the workpiece, each wire path being associated with a corresponding one machining cycle. A wire path for the rough machining is set in a manner having a relatively large offset with respect to a reference target wire travel path (hereinafter referred to as program path) specified by the machining program and corresponding to the product shape. An offset amount of the wire path for each finish machining cycle with respect to the program path is set to be smaller than that of the wire path for the rough machining or for the preceding finish machining cycle.

In the present embodiment, wire diameter correction amounts are used as the offset amounts in setting the individual wire paths for the rough machining and finish machining. As shown in Fig. 2, a wire diameter correction amount $D$ is equal to the sum of a target remaining finish allowance $a$, a target electric discharge gap $b$, and a wire radius $c$. Symbols $d$, $d_i$ and $e$ denote the program path, the wire path, and a machining groove width, respectively, and numerals 40 and 50 denote the wire and the workpiece, respectively.

First to n-th wire diameter correction amounts $D_1$ to $D_n$ for the first to n-th machining cycles are individually manually input by an operator through the MDI 14, for example, and are individually stored in predetermined address regions (offset memory) of the RAM 13 under the control of the CPU 11. In the embodiment, the first to n-th machining cycles are respectively carried out by the use of the wire 40 of a radius $c$ (e.g., 100 $\mu$) with the same discharge gap $b$ (e.g., 50 $\mu$), and the remaining finish allowances $a$ for the first to n-th machining cycles are respectively set to 200 $\mu$, 145 $\mu$, 135 $\mu$, 130 $\mu$, ..., and 0 $\mu$, for instance. Namely, the first to n-th wire diameter correction amounts $D_1$ to $D_n$ are set to 350 $\mu$, 295 $\mu$, ..., and 150 $\mu$, respectively.

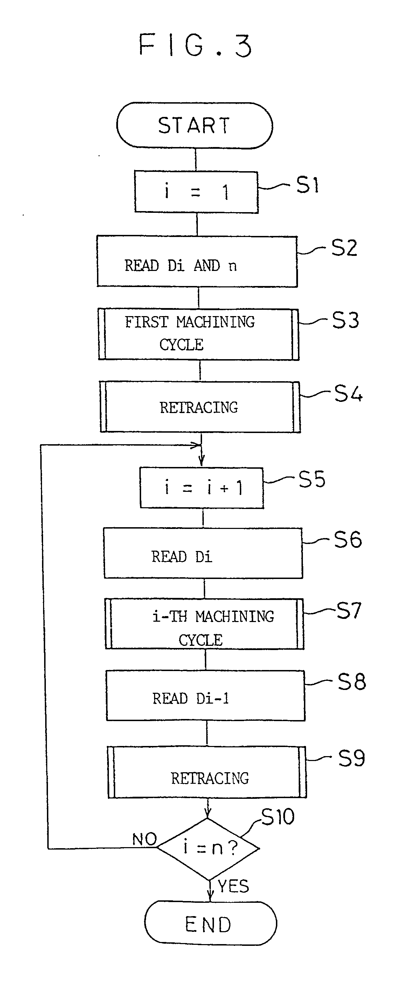

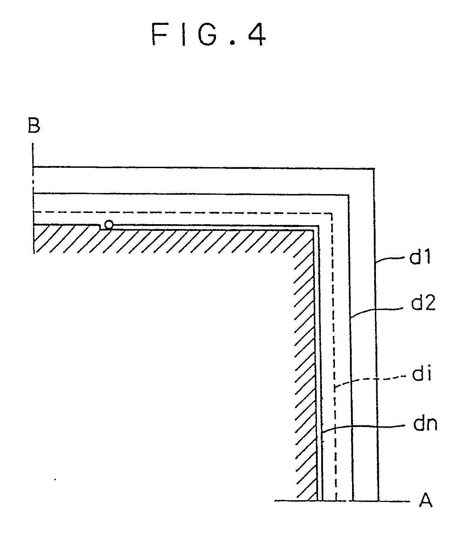

Referring now to Figs. 3 and 4, the operation of the electrical discharge machine will be explained.

Before starting the electrical discharge machining, the operator manually inputs, through the MDI 14, the first to n-th wire diameter correction amounts $D_1$ to $D_n$ and a predetermined repetition n of electrical discharge machining for one product. These parameters are individually stored in the offset memory in the RAM 13 and a register in the RAM 13.

During the electrical discharge machining, the CPU 11 of the numerical control device 10 executes the processes shown in Fig. 3. Namely, upon start of the electrical discharge machining, the CPU 11 sets an index i, indicative of a repetition of executed electrical discharge machining for one product, to an initial value of "1" indicating the first machining cycle, i.e., rough machining (Step S1), and reads out the first wire diameter correction amount D1 corresponding to the index i (= 1) and the predetermined repetition n respectively from the offset memory and the register (Step S2). Then, the CPU 11 sends control outputs to various operating sections of the electrical discharge machine, including the table drive mechanism 20 and the wire feed mechanism 30, in order to perform the first machining cycle in accordance with the machining program (Step S3). As a result, the first cycle of electrical discharge machining is carried out while moving the wire 40 from a machining start point A to a machining end point B along a first wire path d1 determined based on the program path d specified by the machining program and the first wire diameter correction amount D1 (Fig. 4). When a predetermined code (M70 code) related to a retracing operation is read from the machining program after the end of the first machining cycle, a first cycle of retracing operation is performed under the control of the CPU 11 (Step S4). Namely, the table drive mechanism 20 is operated to move the wire 40 backward from the machining end point B toward the machining start point A along the first wire path d1. Instead of reading the command code for the retracing operation from the machining program, a similar code may be generated by a manual operation of the MDI 14.

When the first retracing operation is completed, the CPU 11 updates the value of the index i (= 1) to "2" (Step S5), and reads the second wire diameter correction amount D2 corresponding to the value "2" of the updated index i from the offset memory (Step S6). and executes the second machining cycle (Step S7). The wire path concerned is designated by symbol d2 in Fig. 4. When the M70 code is read from the machining program after the end of the second machining cycle, the CPU 11 reads out the wire diameter correction amount D1 (generally, Di-1) for the preceding machining cycle from the offset memory (Step S8), and then causes the table drive mechanism 20 to move the wire 40 along the wire path d1 for the first machining cycle, so that a second cycle of retracing operation is performed (Step S9). During the second retracing operation, the wire 40 is moved backward from the machining end point B toward the machining start point A along the wire path d1 which is associated with the first machining cycle and whose offset is greater than the offset of the wire path d2 associated with the second machining cycle. As a result, the wire 40 is prevented from being brought into contact with the workpiece 50, whereby the wire 40 can be prevented from snapping and the workpiece 50 can be prevented from being damaged.

Upon completion of the second retracing operation, a determination is made as to whether or not the predetermined repetition n is attained by the value of the index i (Step S10). Here, since the result of determination in Step S10 is negative, the program returns to Step S5, whereupon Steps S5 to S10 are executed. If the result of determination in Step S10 is negative, the program returns again to Step S5. As a result, in each of the third to n-th machining cycles, the electrical discharge machining is performed as the wire moves along the wire path di which is determined based on the program path d and the wire diameter correction amount Di (i = 3, 4, ..., n). During the retracing operation after the end of each machining cycle, the wire 40 is moved backward along the preceding wire path di-1. This makes it possible to positively prevent wire disconnection and flaws attributable to contact between the wire and the workpiece. When the n-th cycle of retracing operation (Step S9) following the n-th machining cycle is completed, it is determined at Step S10 that the predetermined repetition n is attained by the value of the index i, and hence the electrical discharge machining for one product is completed.

In the following, a wire-cut electrical discharge machining method according to a second embodiment of the present invention will be explained.

As compared with the first embodiment wherein the wire is moved backward, during the retracing operation performed after completion of each of finish machining cycles for one product, along the wire path for the preceding machining cycle, the second embodiment differs therefrom in that the wire is moved backward, during the retracing operation following an associated one of those machining cycles which precede a finish machining cycle of a first predetermined order, along the wire path for the associated one machining cycle, as in the conventional retracing operation, and in that the wire is moved backward, during the retracing operation following a corresponding one of those finish machining cycles which follow the finish machining cycle of the first predetermined order, along the wire path for a finish machining cycle of a second predetermined order which precedes the finish machining cycle of the first predetermined order.

The method of the second embodiment can be embodied by the use of an electrical discharge machine which is basically the same in construction as the apparatus of Fig. 1 for embodying the method of the first embodiment. Hence, an explanation of the apparatus will be omitted. However, the RAM 13 is provided with second and third registers for storing the aforesaid cycles of the first and second predetermined orders, in addition to the register (hereinafter referred to as first register) for storing the predetermined repetition n.

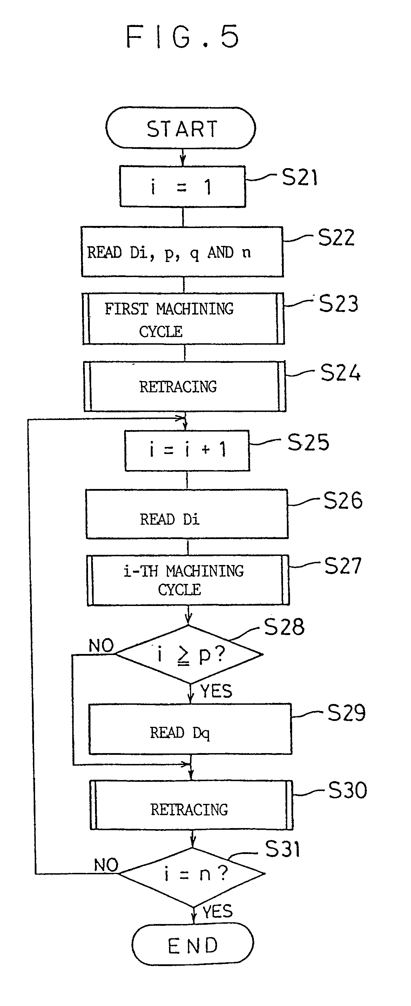

Referring now to Fig. 5, the method of the second embodiment will be described.

Before starting the electrical discharge machining, the operator operates the MDI 14 to manually inputs the first to n-th wire diameter correction amounts D1 to Dn, the predetermined repetition n of electrical discharge machining for one product, and the first and second predetermined orders p and g (n≦p>q). In this embodiment, the first and second predetermined orders p and q are set to "3" and "2," respectively. These parameters are individually stored in the offset memory in the RAM 13 and the first to third registers in the RAM 13.

During the electrical discharge machining, the CPU 11 executes the processes shown in Fig. 5. Namely, upon start of the electrical discharge machining, the CPU 11 sets the index i to the initial value "1," which indicates the first machining cycle (Step S21), and reads out the first wire diameter correction amount D1 corresponding to the index i (= 1), the predetermined repetition n, and the first and second predetermined orders p (= 3) and q (= 2) respectively from the offset memory and the first to third registers (Step S22). Then, the CPU 11 executes Steps S23 and S24 which correspond to Steps S3 and S4 in Fig. 3, respectively. As a result, the first machining cycle is effected while moving the wire 40 along the first wire path d1, and the wire 40 is then moved backward from the machining end point B toward the machining start point A along the first wire path d1.

Subsequently, the CPU 11 executes Steps S25 and S27 which correspond to Steps S5 to S7 in Fig. 3, respectively. Namely, after completion of the first cycle of retracing operation, the CPU 11 reads out the second wire diameter correction amount D2 corresponding to the updated index i (= 2) from the offset memory, and executes the second machining cycle. When the M70 code is read from the machining program after the end of the second machining cycle, the CPU 11 determines whether or not the value of the index i is equal to or larger than the first predetermined number p (Step S28). Here, since the result of determination in Step S28 is negative, the program proceeds to Step S30 without executing Step S29, mentioned later, and the second retracing operation is executed. As a result, the wire 40 is moved backward along the second wire path d2 during the retracing operation.

After completion of the second retracing operation, a determination is made as to whether or not the predetermined repetition n is attained by the value of the index i (Step S31). Here, since the result of determination in Step S31 is negative, the program returns to Step S25, whereupon the value of the index i (= 2) is updated to "3," a third wire diameter correction amount D3 corresponding to the updated index i is read out (Step S26), and the third machining cycle is executed (Step S27). At this time, the wire 40 is moved along a third wire path d3. If it is determined at Step S28 after the end of the third machining cycle that the value of the index i is equal to the first predetermined number p (= 3), the CPU 11 reads out a wire diameter correction amount Dq (= D2) corresponding to the second predetermined order q (Step S29), and performs a third retracing operation (Step S30). As a result, the wire 40 is moved backward, during the third retracing operation, along the second wire path d2 whose offset with respect to the program path d is greater than that of the third wire path d3. In Step S31 after the end of the third retracing operation, it is determined that the predetermined value n is not attained by the value of the index i, and thus the program proceeds to Step S25.

Then, Step S25 and the steps subsequent thereto are executed. If the result of determination in Step S31 is negative, the program returns again to Step S25. As a result, in each of the fourth to n-th machining cycles, the electrical discharge machining is performed as the wire is moved along the wire path di, which is determined based on the program path d and the wire diameter correction amount Di (i = 4, 5, ..., n). During the retracing operation after the end of each machining cycle, the wire 40 is always moved backward along the second wire path d2. Thus, wire disconnection and flaws due to the contact between the wire and the workpiece can be positively prevented. When an n-th cycle of retracing operation (Step S30) directly following the n-th machining cycle is completed, it is determined at Step S31 that the predetermined repetition n is attained by the value of the index i, so that the electrical discharge machining for one product is completed.

The present invention is not limited to the foregoing embodiments, and various modifications thereof may be made. For example, in the first embodiment, each of the second and subsequent retracing operations is executed along the wire path for the electric discharge machining cycle which precedes the concerned machining cycle. Alternatively, any one of the third to n-th retracing operations or its subsequent cycle may be executed along the wire path for the preceding machining cycle concerned. Moreover, in the second embodiment, the third and subsequent retracing operations are executed along the wire path for the second machining cycle. Alternatively, the second and subsequent retracing operations may be executed along the wire path associated with the first machining cycle. Furthermore, in these embodiments, a plurality of machining cycles are carried out, with the electric discharge gap and the wire electrode diameter respectively fixed. Alternatively, wire electrodes of different diameters may be used, and the discharge gap may be changed during the plurality of machining cycles.

## Claims

1. A wire-cut electrical discharge machining method in which a plurality of cycles of electrical discharge machining are successively performed for production of one product, said method comprising the steps of:
    (a) successively selecting offset amounts among a group of different offset amounts in a descending order of magnitude;
    (b) performing electrical discharge machining while moving a wire electrode along a target wire path every time one of the offset amounts is selected, said target wire path being determined based on said selected one offset amount and a reference target wire path;
    (c) selecting a second offset amount smaller than the offset amount of the target wire path for a corresponding one of those electrical discharge machining cycles which include a cycle of a predetermined order and subsequent cycles, every time said corresponding one electrical discharge machining cycle is completed; and
    (d) moving said wire electrode in a direction opposite to a wire moving direction for the electrical discharge machining, along a second target wire path every time the second offset amount is selected, said second target wire path being determined based on the selected second offset amount concerned and said reference target wire path.

2. An electrical discharge machining method according to claim 1, wherein said second offset amount is equal to the offset amount of the target wire path associated with the preceding electrical discharge machining cycle.

3. An electrical discharge machining method according to claim 1, wherein said second offset amount is equal to the offset amount of the target wire path associated with an electrical discharge machining cycle of a second predetermined order which precedes the electrical discharge machining cycle of said predetermined order.

4. An electrical discharge machining method according to claim 2, wherein the electrical discharge machining cycle of said predetermined order is a second electrical discharge machining cycle.

5. An electrical discharge machining method according to claim 1, wherein said reference target wire path is specified by a machining program.

6. An electrical discharge machining method according to claim 1, wherein said offset amount is equal to the sum of the radius of the wire electrode, a target discharge gap, and a target remaining finish allowance, and at least said target remaining finish allowance is set to a value which is different between the respective electrical discharge machining cycles.

# FIG. 1

# FIG. 2

# FIG.3

```
              START

              i = 1              S1

         READ Di AND n           S2

         FIRST MACHINING         S3
             CYCLE

            RETRACING            S4


            i = i + 1            S5

            READ Di              S6

         i-TH MACHINING          S7
             CYCLE

            READ Di-1            S8

            RETRACING            S9

    NO                           S10
         i = n ?

               YES

              END
```

# F I G . 4

B

d1

d2

di

dn

A

# F I G . 5

```
                    ┌─────────────┐
                    │    START    │
                    └──────┬──────┘
                           │
                    ┌──────▼──────┐
                    │   i = 1     │────S21
                    └──────┬──────┘
                           │
              ┌────────────▼────────────┐
              │  READ Di, p, q AND n    │────S22
              └────────────┬────────────┘
                           │
              ┌────────────▼────────────┐
              │   FIRST MACHINING       │────S23
              │       CYCLE             │
              └────────────┬────────────┘
                           │
              ┌────────────▼────────────┐
              │       RETRACING         │────S24
              └────────────┬────────────┘
                           │
                    ┌──────▼──────┐
                    │  i = i + 1  │────S25
                    └──────┬──────┘
                           │
              ┌────────────▼────────────┐
              │        READ Di          │────S26
              └────────────┬────────────┘
                           │
              ┌────────────▼────────────┐
              │   i-TH MACHINING        │────S27
              │       CYCLE             │
              └────────────┬────────────┘
                           │
                    ┌──────▼──────┐
              NO    │   i ≧ p?    │────S28
              ◄─────┤             │
                    └──────┬──────┘
                         YES│
              ┌────────────▼────────────┐
              │        READ Dq          │────S29
              └────────────┬────────────┘
                           │
              ┌────────────▼────────────┐
              │       RETRACING         │────S30
              └────────────┬────────────┘
                           │
                    ┌──────▼──────┐
              NO    │   i = n?    │────S31
              ◄─────┤             │
                    └──────┬──────┘
                         YES│
                    ┌──────▼──────┐
                    │    END      │
                    └─────────────┘
```

11

# INTERNATIONAL SEARCH REPORT

International Application No  PCT/JP90/00770

**I. CLASSIFICATION OF SUBJECT MATTER** (if several classification symbols apply, indicate all) [6]

According to International Patent Classification (IPC) or to both National Classification and IPC

Int. Cl$^5$      B23H7/06

**II. FIELDS SEARCHED**

| Minimum Documentation Searched [7] | |
|---|---|
| Classification System | Classification Symbols |
| IPC | B23H7/06 |

| Documentation Searched other than Minimum Documentation to the Extent that such Documents are Included in the Fields Searched [8] | |
|---|---|
| Jitsuyo Shinan Koho | 1926 – 1990 |
| Kokai Jitsuyo Shinan Koho | 1971 – 1990 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 59-19638 (Fanuc Ltd.), 1 February 1984 (01. 02. 84), Lines 3 to 20, upper left column, page 3; upper and lower right columns, and lower left column, page 3; page 4; upper left column and lines 1 to 7, upper right column, page 5; Figs. 4 to 7 (Family: none) | 1 – 6 |
| Y | JP, A, 63-134117 (Mitsubishi Electric Corp.), 6 June 1988 (06. 06. 88), Lines 4 to 15, upper left column, page 3; Figs. 1(a) & 1(b) (Family: none) | 1 – 6 |
| Y | JP, A, 56-56349 (Fanuc Ltd.), 18 May 1981 (18. 05. 81), Lines 1 to 19, upper right column, page 2; drawings (Family: none) | 1 – 6 |

\* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| September 3, 1990 (03. 09. 90) | September 17, 1990 (17. 09. 90) |
| International Searching Authority | Signature of Authorized Officer |
| Japanese Patent Office | |

Form PCT ISA/210 (second sheet) (January 1985)